# FASCICULE DE BREVET EUROPEEN

(11) **EP 2 434 659 B1**
(45) Date de publication et mention de la délivrance du brevet: **06.03.2013**
(21) Numéro de dépôt: 11182609.5
(22) Date de dépôt: 23.09.2011
(51) Int. Cl.: H04B 7/185

(54) **Procédé de configuration d'un traitement adaptatif de signaux primaires par la transmission de signaux secondaires de signalisation étalés en fréquence**
Verfahren zur Konfigurierung einer adaptiven Verarbeitung von Primärsignalen durch Übertragung von sekundären Spreizfrequenzsignalisierungssignalen
Method for configuring an adaptive processing of primary signals by the transmission of secondary spread-frequency signalling signals

(30) Priorité: 24.09.2010 FR 1003790
(43) Date de publication de la demande: 28.03.2012
(73) Titulaire: Thales, 92200 Neuilly Sur Seine (FR)
(72) Inventeur: Corbel, Erwan, 31270 VILLENEUVE TOLOSANE (FR); Baudoin, Cédric, 31400 TOULOUSE (FR); Dervin, Mathieu, 31000 TOULOUSE (FR); Faraj, Zakariya, 31700 BLAGNAC (FR)
(74) Mandataire: Labatte, Laurent

(56) Documents cités:
- WO-A2-01/24408
- US-A1- 2004 033 780
- CASTRO M A V ET AL: "VoIP cross-layer load control for hybrid satellite-WiMAX networks", IEEE WIRELESS COMMUNICATIONS, IEEE SERVICE CENTER, PISCATAWAY, NJ, US, vol. 15, no. 3, 1 juin 2008 (2008-06-01), pages 32-39, XP011228287, ISSN: 1536-1284, DOI: 10.1109/MWC.2008.4547520

## Description

La présente invention concerne un procédé de configuration d'un traitement adaptatif de signaux primaires grâce à la transmission de signaux secondaires étalés en fréquence. Elle s'applique notamment à la commutation dynamique de faisceaux dans un satellite multifaisceaux et à la commutation dynamique de trames, par exemple dans un système à accès multiple par répartition dans le temps.

Dans un système de communication par satellite, une station généralement au sol émet un flux de données vers la charge utile du satellite qui transmet les données vers un ou plusieurs destinataires au sol grâce à un ou plusieurs faisceaux. Les données sont structurées sous la forme de trames, notamment pour effectuer un partage de la liaison, par exemple entre plusieurs utilisateurs. Dans ce contexte, une trame est un bloc de données à émettre à un instant précis, sur une fréquence porteuse déterminée et dans un faisceau donné. Aussi, lorsque le flux de données n'est pas organisé selon une loi de répartition connue à l'avance et invariable, mais contient des trames dont on ne peut prévoir l'instant d'émission, la fréquence porteuse destination et/ou le faisceau destination, le satellite doit commuter dynamiquement les trames. Autrement dit, le satellite doit, après avoir reçu les trames, déterminer en temps réel leurs paramètres de transmission et les orienter vers le faisceau qui convient.

Une première technique connue pour commuter dynamiquement des trames au niveau du satellite est d'utiliser une liaison de type « télécommande ». Un centre de contrôle, parfois désigné par l'acronyme MCC pour « Mission Control Center » émet vers le satellite les plans de correspondance temps/fréquence montant et descendant, ce qui permet à la charge utile de connaître les fréquences des porteuses, les instants de commutation et la destination des trames. Cependant, cette technique requiert la transmission d'un grand volume de données de commande, ce qui ne cadre pas toujours avec les contraintes de débit disponibles sur le satellite. Cet inconvénient est d'autant plus critique que la période de rafraichissement des paramètres de commutation est petite, ou autrement dit que la « dynamicité » de la commutation est grande.

Selon une deuxième technique possible, une ou plusieurs porteuses sont dédiées à la signalisation. Autrement dit, en plus de la ou des premières porteuses qui véhiculent les premiers signaux, une station sol émet une porteuse modulée, sur une autre fréquence, dédiée au transport des données de signalisation. Cette porteuse dédiée est synchronisée avec la première porteuse, et est démodulée par la charge utile du satellite pour indiquer la fréquence de la porteuse vers laquelle la commutation doit être effectuée, les instants de commutation et la destination des trames. En outre, la porteuse dédiée peut être partagée entre plusieurs utilisateurs selon un multiplexage de type TDMA (« Time Division Multiple Access »). Toutefois, cette deuxième technique requiert l'occupation d'une partie du spectre fréquentiel pour les données de signalisation. De plus, le nombre de porteuses ou la taille du canal fréquentiel occupé pour la signalisation dépend du nombre de stations sol dans le réseau.

Selon une troisième technique envisageable, des en-têtes sont insérés dans les trames des premiers signaux. La charge utile du satellite détecte ces en-têtes qui permettent à la charge utile de connaître les instants de commutations et la destination des trames. Cependant, cette troisième technique nécessite la modification d'une forme d'onde existante, et donc potentiellement standardisée, par insertion d'un en-tête spécifique ou par modification de champs d'en-tête préexistants (par exemple, dans le cas de l'adressage de type ATM, sigle anglo-saxon pour « Asynchronous Transfert Mode » signifiant mode de transfert asynchrone). Aussi, cette troisième technique ne permet pas (ou difficilement) d'effectuer une commutation transparente des premiers signaux.

Un but de l'invention est de proposer une méthode pour effectuer une signalisation sur des signaux transmis à un récepteur, par exemple un satellite, sans affecter la structure desdits signaux, l'occupation du spectre ou le débit utile. A cet effet, l'invention a pour objet un procédé de configuration en temps réel d'un équipement recevant et traitant des signaux primaires qui lui sont transmis par liaison satellitaire, ledit procédé étant caractérisé en ce qu'il comprend l'émission de signaux secondaires étalés en fréquences sur une bande recouvrant au moins partiellement la bande de fréquence occupée par les signaux primaires, lesdits signaux secondaires comprenant des paramètres de signalisation qui sont exploités, en temps réel, par ledit équipement pour configurer le traitement qui est appliqué aux signaux primaires.

Le procédé permet donc d'appliquer, au niveau de l'équipement, un traitement adaptatif, paramétré par une information apportée par la porteuse secondaire. Ainsi, par exemple, pour un équipement transmettant des données via un système antennaire, des paramètres peuvent être insérés dans les signaux secondaires pour ajuster le contrôle de gain du répéteur incluant l'antenne en fonction des types de données à transmettre ; de même, les coefficients d'un réseau formateur de faisceaux peuvent être modifiés pour adapter le diagramme d'antenne dynamiquement. Le procédé peut être également utilisé pour paramétrer la commutation dynamique des trames.

Selon une mise en oeuvre du procédé selon l'invention, la bande de fréquence occupée par les signaux primaires inclut la bande occupée par les signaux secondaires. Les signaux secondaires présentent alors notamment l'avantage de ne pas occuper d'espace spectral supplémentaire par rapport aux signaux primaires.

Selon une mise en oeuvre du procédé selon l'invention, les signaux secondaires sont portés par une fréquence porteuse étalée par une séquence d'étalement pseudo-aléatoire, ladite porteuse étant étalée sur une bande suffisamment large pour ne pas perturber le décodage des signaux primaires, le rapport de densité spectrale de puissance des signaux primaires aux signaux secondaires étant suffisamment élevé pour éviter la production d'interférences entres les signaux primaires et les signaux secondaires nuisibles à la transmission des signaux primaires. La valeur minimum de ce rapport dépend du dimensionnement du système et des capacités de la forme d'onde à résister aux interférences.

Selon une mise en oeuvre du procédé selon l'invention, la porteuse soumise à un étalement en fréquence est, avant ledit étalement, modulée par un signal comprenant des symboles d'informations. Ce type de signaux est qualifié de type II.

Selon une mise en oeuvre du procédé selon l'invention, l'équipement doit commuter en temps réel des trames de données vers différentes sorties, lesdites trames étant contenues dans lesdits signaux primaires, lesdits signaux secondaires comprenant des paramètres de signalisation, qui couplés aux signaux primaires, permettent au dit équipement d'associer une sortie à chacune desdites trames.

Les signaux secondaires contiennent des métadonnées sur les signaux primaires. Ces signaux secondaires évoluent dans le temps, parallèlement aux signaux primaires, de manière à ce que l'équipement recevant les signaux primaires à commuter puisse connaître en temps réel les paramètres de commutation qui s'appliquent. La commutation peut ainsi être effectuée de manière transparente, et sans affecter ni le débit de données, ni l'occupation spectrale. Les trames peuvent par exemple être des trames de type DVB-S2.

Selon une mise en oeuvre du procédé selon l'invention, l'équipement récepteur est un satellite de communications multifaisceaux, les signaux primaires et les signaux secondaires étant transmis d'une station au sol vers ledit satellite, la commutation des signaux primaires étant effectuée à bord dudit satellite, pour orienter chaque trame vers l'un des faisceaux dudit satellite. Sans sortir du cadre de l'invention et selon une autre mise en oeuvre du procédé, c'est une station au sol qui reçoit d'un satellite des signaux à commuter. Dans ce cas, c'est le satellite qui produit les signaux secondaires la station au sol étant configurée pour commuter les signaux primaires grâce aux informations contenues dans ces signaux secondaires.

Selon une mise en oeuvre du procédé selon l'invention, les paramètres de signalisation comprennent, pour chaque trame à commuter:
● la ou les fréquences porteuses sur lesquelles émettre ladite trame ;
● une indication de la sortie prévue pour ladite trame.

Les paramètres de signalisation peuvent également comprendre des informations complémentaires, par exemple pour configurer l'équipement commutateur des trames.

Selon une mise en oeuvre du procédé selon l'invention,
● soit les signaux secondaires sont synchronisés aux signaux primaires ;
● soit, pour chaque trame à commuter, des indications sur les instants auxquels la trame doit être commutée sont intégrés aux paramètres de signalisation compris par les signaux secondaires.

Selon une mise en oeuvre du procédé selon l'invention, des correspondances entre paramètres de signalisation et trames à commuter sont établies,
■ pour chaque trame du signal primaire, un dispositif émetteur étale au moins une fréquence porteuse par une séquence d'étalement qui dépend des paramètres de signalisation à appliquer sur ladite trame, afin de générer lesdits signaux secondaires ;
■ lesdites correspondances sont transmises, via une liaison de communications, à l'équipement devant commuter les trames ;
■ dans ledit équipement :
   o retrouver, par corrélation avec la séquence d'étalement transmise au satellite dans lesdites correspondances, la séquence ayant été utilisée pour étaler en fréquence les signaux secondaires, les signaux secondaires étant désétalés en utilisant ladite séquence d'étalement pour extraire les paramètres de signalisation ;
   o utiliser les paramètres de signalisation pour commuter les trames des signaux primaires.

Selon une mise en oeuvre du procédé selon l'invention, les signaux primaires sont portés par une ou plusieurs fréquences porteuses, une séquence pseudo-aléatoire d'étalement par couple {fréquence porteuse des signaux primaires, faisceau destinataire} étant utilisée, les séquences pseudo-aléatoires étant orthogonales.

L'invention a également pour objet un dispositif de commutation de trames installé à bord d'un satellite multifaisceaux, ledit dispositif comprenant au moins une antenne de réception apte à recevoir des signaux primaires comportant des trames à commuter et des signaux secondaires étalés en fréquence sur une bande recouvrant au moins partiellement celle occupée par lesdits premiers signaux, les signaux secondaires comportant des paramètres de signalisation de commutation, caractérisé en ce qu'il comprend un module de commutation alimenté par un module d'extraction des paramètres de signalisation à partir des signaux secondaires étalés, et par un module de configuration enregistrant les correspondances entre séquences d'étalement et paramètres de commutation, le module de commutation étant adapté à orienter les trames des signaux primaires vers le faisceau désigné dans lesdits paramètres de signalisation.

D'autres caractéristiques apparaîtront à la lecture de la description détaillée donnée à titre d'exemple et non limitative qui suit faite en regard de dessins annexés qui représentent :
- la figure 1, un exemple de système de communications par satellite devant effectuer une commutation de faisceaux ;
- la figure 2a, un schéma montrant la répartition des trames de signaux à commuter dans le cas où ces signaux sont portés par une seule fréquence ;
- la figure 2b, un schéma montrant la répartition des trames de signaux à commuter dans le cas où ces signaux sont portés par plusieurs fréquences distinctes ;
- la figure 3, un synoptique illustrant les étapes d'un exemple de procédé selon l'invention ;
- la figure 4, un exemple d'architecture d'un système mettant en oeuvre le procédé selon l'invention.

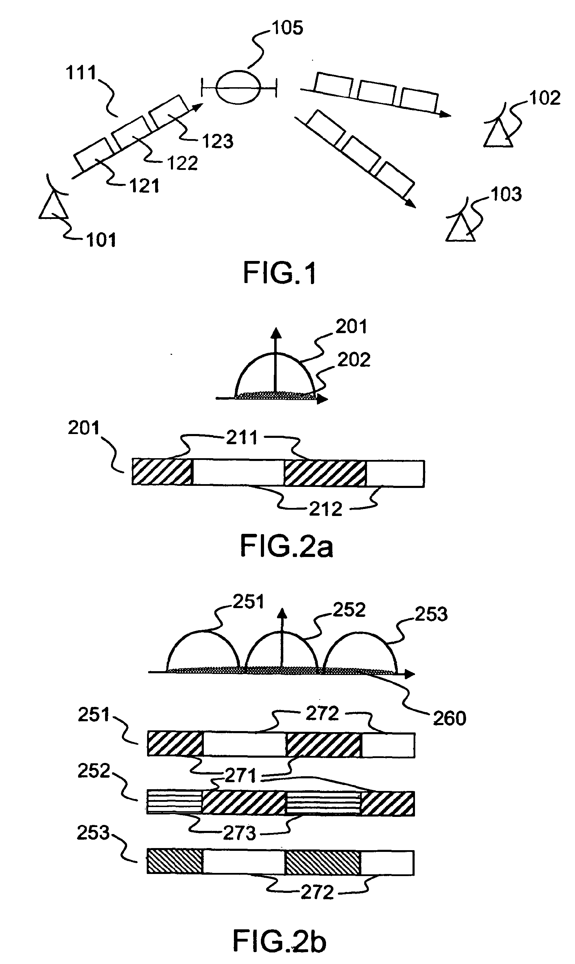

La figure 1 présente un exemple de système de communications par satellite devant effectuer une commutation de faisceaux. Le système de l'exemple comprend trois stations au sol 101, 102, 103 et un satellite 105. Une première station 101 émet des signaux 111 vers le satellite 105. Ces signaux 111 comprennent une série de trames 121, 122, 123, dont certaines doivent être transmises à la deuxième station 102 et d'autres à la troisième station 103. Le satellite 105 doit donc, à des instants précis, commuter les signaux reçus 111 sur un faisceau donné, et sur une porteuse donnée, de manière à ce que toutes les trames atteignent le destinataire prévu. Le procédé selon l'invention permet d'effectuer cette commutation sans les inconvénients précités de l'art antérieur.

De manière analogue, un système de communications utilisé, par exemple, pour faire de la commutation de paquets ou bursts à destination d'une seule ou de plusieurs zones distinctes, doit avoir une charge utile qui affecte à des instants précis, les trames composant les signaux qu'elle reçoit sur une fréquence porteuse déterminée, et éventuellement sur un faisceau déterminé si les utilisateurs destinataires sont situés dans des zones distinctes.

La figure 2a présente un schéma montrant la répartition des trames de signaux à commuter dans le cas où ces signaux sont portés par une seule fréquence.

Une première porteuse transportant des signaux à commuter, dits « signaux primaires », est représentée schématiquement par une première courbe 201 de densité spectrale de puissance. Cette première porteuse, transporte les signaux primaires sous la forme d'un ensemble de trames. Par « trame », on entend un bloc de données, dont la taille n'est pas nécessairement fixée, et ayant une zone destination déterminée. A titre d'illustration, une trame de commutation peut correspondre à un ensemble de trames de type DVB-S2 (« Digital Video Broadcasting » ― 2^{ème} génération) ou à un ensemble d'impulsions de la voie retour d'un système DVB-RCS (« Digital Video Broadcasting ― Return Channel via Satellite »). Dans l'exemple de la figure 2a, un premier sous-ensemble de trames 211 est destiné à être émis vers une première zone, et un second sous-ensemble de trames 212 est destiné à être émis vers une seconde zone. Le satellite recevant les signaux primaires doit donc commuter les trames 211, 212 de ces signaux vers le faisceau couvrant la zone de destination appropriée.

Pour que la commutation vers chacune des zones soit correctement opérée, le procédé selon l'invention transmet des données de signalisation via une porteuse secondaire, représentée par une seconde courbe 202, et dont la densité spectrale de puissance est très inférieure à la densité spectrale de puissance de la porteuse primaire. Par exemple, l'écart de densité spectrale de puissance est égale à -20dB au point maximum, de manière à éviter toute interférence entre les signaux à commuter et les signaux de signalisation, dits « signaux secondaires ». Avantageusement, la porteuse secondaire couvre une bande de fréquence incluse dans la bande de fréquence couverte par la porteuse primaire, de sorte qu'aucune occupation spectrale supplémentaire n'est requise pour la transmission des signaux de signalisation. La porteuse secondaire peut être étalée, par exemple, par multiplication avec une séquence pseudo-aléatoire, parfois appelée code PN pour « Pseudo Noise » en langue anglaise.

Les signaux primaires à commuter et les signaux secondaires de signalisation sont intimement liés. Autrement dit, les signaux primaires ne peuvent être transmis correctement aux destinataires en l'absence des signaux secondaires, et les signaux secondaires sont sans objet en l'absence des signaux primaires. La charge utile du satellite reçoit à la fois les signaux primaires et les signaux secondaires, ces derniers étant désétalés pour pouvoir décoder les informations de signalisation se rapportant aux signaux à commuter.

La figure 2b présente un schéma montrant la répartition des trames de signaux à commuter dans le cas où ces signaux sont transmis sur plusieurs porteuses distinctes. Dans l'exemple de la figure 2b, trois porteuses primaires 251, 252, 253 sont utilisées pour transmettre les signaux à commuter. Une porteuse secondaire 260, étalée sur la bande de fréquence occupée par les trois porteuses primaires, comprend les signaux de signalisation permettant de commuter les trames contenues dans les signaux transmis sur les porteuses primaires. Dans l'exemple, l'ensemble des trois porteuses comprend des trames à commuter vers quatre faisceaux différents. La première porteuse primaire 251 comprend une alternance de trames 271, 272 destinées respectivement au premier faisceau et au deuxième faisceau. La deuxième porteuse primaire 252 comprend une alternance de trames 273, 271 destinées au troisième faisceau et au premier faisceau et la troisième porteuse primaire 253 comprend une alternance de trames 274, 271 destinées au quatrième faisceau et au premier faisceau.

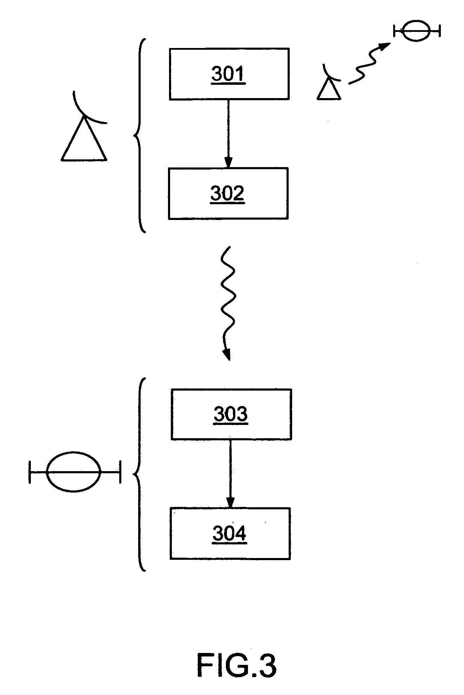

La figure 3 présente un synoptique illustrant les étapes d'un exemple de procédé selon l'invention utilisé pour effectuer de la commutation de faisceaux. Dans l'exemple, les signaux sont émis du sol vers un satellite, lequel effectue la commutation des signaux primaires. Selon une autre mise en oeuvre du procédé selon l'invention, les signaux sont émis par un satellite en direction d'une station terrestre, laquelle oriente les signaux primaires, par exemple vers plusieurs destinataires au sol.

Dans un premier temps 301, des paramètres de transmissions des signaux primaires sont fixés pour chaque type de trame. Par exemple, pour chaque destinataire, une fréquence porteuse lui est affectée ainsi que la zone destination dans laquelle il se situe. Ces paramètres de transmissions sont communiqués au satellite, par exemple, via une liaison de type télécommande. Le satellite enregistre ces paramètres dont il aura besoin pour commuter les signaux.

Dans le cas de la commutation de trames ou de paquets, un plan de fréquence est distribué à toutes les stations au sol par un contrôleur pour indiquer les slots disponibles sur chaque couverture de faisceau.

Dans un deuxième temps 302, les signaux secondaires étalés en fréquences sont générés en relation avec les signaux primaires. Plusieurs types de modulation peuvent être employés pour générer les signaux secondaires.

Selon un mode de mise en oeuvre du procédé selon l'invention, les signaux de signalisation sont de type I. Dans ce cas, les signaux secondaires étalés sont obtenus, par exemple, en modulant une porteuse pure à l'aide d'une séquence de pseudo-bruit, une séquence différente étant affectée à chaque jeu de paramètres, un jeu de paramètres étant dans l'exemple un couple {porteuse primaire, faisceau}. Les séquences utilisées doivent être orthogonales et par conséquent constituent des signatures des porteuses modulées. Les correspondances entre les séquences et les couples {porteuse primaire, faisceau} sont transmises au satellite, par exemple par la liaison de télécommande précitée, le satellite enregistrant ces correspondances. Ainsi, pour les signaux de signalisation de type I, grâce aux correspondances enregistrées, la seule connaissance de la séquence utilisée pour moduler la porteuse suffit au satellite à déterminer les paramètres de commutation à appliquer aux trames concernées. La séquence peut être considérée comme une signature à partir de laquelle on peut retrouver le jeu de paramètres.

Selon un autre mode de mise en oeuvre du procédé selon l'invention, les signaux de signalisation sont de type II. Dans ce cas, les signaux secondaires sont obtenus par étalement, sur un spectre plus large à l'aide d'une séquence de pseudo-bruit, d'une porteuse modulée contenant des symboles d'informations. Les symboles d'information contiennent par exemple :
■ un mot de référence pour aider à déterminer les débuts de trames ;
■ une information de datation du début et de fin de prochaine trame destinée au même faisceau que la trame en cours ; et éventuellement
■ d'autres informations spécifiques à la configuration de la charge utile du satellite, par exemple la destination d'une trame ou les lois de contrôle que doit appliquer un réseau de formation de faisceaux (ou BFN pour « Beam Forming Network »), qu'il soit numérique ou analogique ; dans le cas où le module de commutation comprend un réseau numérique de formation de faisceaux, les séquences de poids pour chaque faisceau peuvent être transmises.

A titre d'illustration, en partant des hypothèses suivantes :
● les signaux de signalisation sont émis avec une puissance inférieure de 20 dB à celle des signaux primaires,
● les signaux de signalisation sont reçus au moins 5 dB au-dessus du bruit thermique au pied de l'antenne satellite, et
● le seuil de C/N pour la détection des séquences ou le seuil de démodulation est de 7 dB,
on peut étaler les signaux de signalisation avec un étalement de l'ordre d'un facteur 1000, c'est-à-dire 30 dB. Si la durée d'une trame à commuter est de 100 ms et si 1000 bits d'informations sont envoyés à chaque fois, alors le débit utile est 10 kb/s dans 10 kHz et la bande d'étalement est de 10 MHz. Cette valeur est compatible, par exemple, de la taille d'une porteuse DVB-S2 ou de la bande allouée à un spot pour un système type DVB-RCS.

La station au sol qui émet les signaux de signalisation doit connaître :
● les séquences associées aux couples {porteuse, faisceau},
● les instants de débuts de trames (au niveau de la couche accès),
● la synchronisation sur le rythme symbole de la porteuse (au niveau de la couche physique).

En outre, les signaux, quel que soit leur type, peuvent être étalés sur l'espace spectral occupé par une seule porteuse (cf. figure 2a) ou l'espace spectral occupé par plusieurs porteuses (cf. figure 2b). Dans le cas où le signal secondaire est étalé sur le spectre occupé par plusieurs porteuses du signal primaire, l'utilisation d'une séquence pseudo-aléatoire différente par porteuse primaire permet de séparer les porteuses.

Par ailleurs, les signaux secondaires peuvent être synchronisés avec les signaux primaires, de manière à ce que les débuts de trames (c'est-à-dire les instants où de nouveaux paramètres de commutation doivent être appliqués) soient implicitement définis par les moments d'arrivée des signaux secondaires. Alternativement, les signaux secondaires et primaires, même s'ils ne sont pas totalement asynchrones, ne sont pas parfaitement synchronisés. Dans ce dernier cas, et pour les signaux de type II, des informations de datation doivent être intégrées dans les signaux secondaires, de manière à déterminer les débuts et les fins de trames pour appliquer le jeu de paramètre prévu pour chacune des trames.

Les signaux secondaires sont ainsi générés continûment dans le temps en relation avec les signaux primaires, puis ils sont émis simultanément aux signaux primaires par la station au sol vers le satellite multifaisceaux.

Dans le cas de la commutation de trames ou de paquets, chaque station au sol peut envoyer des signaux de signalisation pour informer la charge utile du satellite de la destination de ses trames.

Dans un troisième temps 303, l'équipement récepteur qui, dans l'exemple, est la charge utile d'un satellite, extrait les informations de signalisation contenues dans les signaux secondaires, au fur et à mesure de la réception des signaux primaires et secondaires. Ces informations extraites en temps réel contiennent les paramètres applicables pour commuter les trames contenues dans les signaux primaires.

Grâce aux séquences enregistrées dans la charge utile, la ou les séquences utilisées pour coder les paramètres de commutation, sont retrouvées par corrélation. Une fois la ou les séquences retrouvées, celles-ci sont utilisées pour désétaler le signal secondaire et décoder les paramètres de commutation.

Dans le cas où le signal secondaire est étalé sur le spectre occupé par plusieurs porteuses du signal primaire, l'utilisation d'une séquence pseudo-aléatoire par porteuse primaire permet de séparer les porteuses. Les séquences se succèdent avec un rythme de trame supérieur à celui des porteuses primaires. Les signaux secondaires sont désétalés puis démodulés à bord du satellite. Le désétalement permet d'utiliser les informations de datation contenues dans les symboles d'informations (pour les porteuses secondaires de type II). Optionnellement, un code correcteur en bloc est utilisé pour abaisser le seuil de démodulation.

Dans un quatrième temps 304, le satellite applique en temps réel, les paramètres de commutation extraits précédemment aux signaux primaires pour les orienter vers les sorties adéquates. Par « sortie », on entend par exemple un accès d'antenne, ou si une antenne active est utilisée, une certaine répartition des poids affectée aux différents éléments rayonnants de l'antenne pour émettre dans la direction souhaitée.

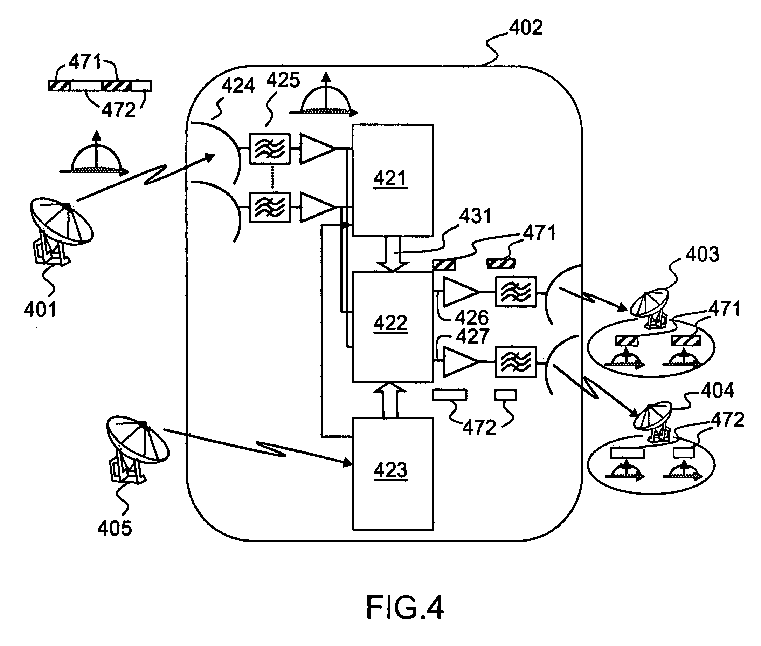

La figure 4 présente un exemple d'architecture d'un système mettant en oeuvre le procédé selon l'invention, dans le cas de la commutation de faisceaux.

Le système comprend une première station au sol 401 émettant des signaux vers un satellite 402, lequel commute les signaux reçus vers une deuxième station 403 située dans une première zone au sol ou une troisième station 404 située dans une deuxième zone au sol.

Le satellite 402 comprend un module d'extraction des signaux 421, un module de commutation 422 et un module de configuration 423.

La première station 401 au sol émet :
● des signaux primaires comprenant des trames destinées alternativement à la deuxième station au sol 403 et la troisième station au sol 404 ;
● des signaux de signalisation étalés en fréquence avec une séquence pseudo-aléatoire différente pour chaque faisceau.

Le module de configuration 423 à bord du satellite permet notamment d'enregistrer les séquences (codes) pseudo-aléatoires utilisées pour étaler les signaux de signalisation en fréquence. Une séquence pseudo-aléatoire différente est affectée à chaque faisceau, les séquences étant, avantageusement, orthogonales. Les correspondances entre séquences pseudo-aléatoires et faisceaux sont transmises du sol vers le satellite, par exemple, par une liaison de type télécommande, une station de configuration au sol 405 indiquant au module de commutation 422 lesdites correspondances.

Les signaux émis par la première station au sol 401 — autrement dit, les signaux primaires et les signaux de signalisation — sont reçus via une antenne 424 alimentant une chaîne de filtrage et d'amplification 425. Les signaux sont dupliqués en sortie de cette chaîne, puis transmis à la fois au module d'extraction des signaux 421 et au module de commutation 422. Le module d'extraction des signaux 421 comprend, par exemple, un banc de corrélateurs lorsque les signaux de signalisation sont de type I, ou un banc de corrélateurs et un démodulateur si les signaux de signalisation sont de type II.

Le banc de corrélateurs utilise les séquences enregistrées par le module de configuration 423 pour déterminer, par corrélation avec les signaux reçus, la ou les séquences qui ont été utilisées pour étaler le signal secondaire. Lors du traitement de corrélation effectué à bord du satellite, une mémoire tampon est utilisée pour stocker les signaux primaires pendant la détermination des débuts de trames. Avantageusement, l'extraction de la signalisation de type I est réalisée par des technologies numériques, l'utilisation de la mémoire tampon imposant généralement un traitement numérique. L'extraction de la signalisation pourrait être réalisée à l'aide de technologies analogiques. L'extraction de la signalisation de type II exploite des technologies numériques, le commutateur à bord du satellite pouvant être analogique ou numérique.

Le module d'extraction des signaux 421 applique la séquence adéquate aux signaux reçus pour désétaler les signaux secondaires et déterminer les débuts de trames. Les paramètres de commutation extraits des signaux désétalés sont transmis au module de commutation 422, lequel reçoit en parallèle les signaux primaires. Parallèlement, les correspondances 432 entre séquences pseudo-aléatoires et faisceaux enregistrées dans le module de configuration 423 sont transmises au module de commutation 422.

Pourvu des informations de signalisation 431 et des correspondances 432, le module de commutation 422 peut acheminer les signaux primaires destinés à des faisceaux différents vers les accès 426, 427 antenne correspondants. Selon un mode de réalisation du système, l'antenne d'émission présente dans la charge utile pour émettre les trames vers les zones de destination est une antenne active opérant par application de déphasages différents sur plusieurs éléments rayonnants. Le module de commutation 422 dans le cas de la commutation de faisceaux, peut être par exemple, un PNT (Processeur Numérique Transparent) ou un réseau numérique de formation de faisceaux (ou DBFN pour « Digital Beam Forming Network ») si une antenne active est envisagée.

Dans l'exemple de la figure 4, les trames 471 destinées à la deuxième station au sol 403 sont représentées en hachuré, tandis que les trames 472 destinées à la troisième station au sol 404 sont représentées en blanc.

Selon une mise en oeuvre du procédé selon l'invention, les signaux secondaires comprennent des informations de configuration permettant, par exemple, de configurer la puissance d'émission ou d'autres paramètres propres à la charge utile réceptrice des signaux secondaires. Par exemple, des paramètres permettant de régler le point de fonctionnement des amplificateurs peuvent être transmis dans le signal secondaire pour modifier la configuration pendant une durée déterminée (correspondant par exemple à l'émission de certaines trames).

Le procédé selon l'invention comporte plusieurs avantages. Notamment, il ne modifie pas la définition de la forme d'onde des signaux primaires — autrement dit, le procédé est transparent —, il ne requiert pas de liaison haut débit de type télécommande synchronisée avec les signaux primaires. De plus, lorsque la bande sur laquelle sont étalés les signaux de signalisation est incluse dans la bande de fréquence occupée par les signaux primaires, la mise en oeuvre du procédé ne requiert aucune ressource en fréquence dédiée uniquement à la signalisation. Par ailleurs, le procédé ne modifie pas la canalisation à bord du satellite.

## Revendications

1. Procédé de configuration en temps réel d'un équipement (402) recevant et traitant des signaux primaires (201, 251, 252, 253) qui lui sont transmis par liaison satellitaire, ledit procédé étant **caractérisé en ce qu'**il comprend l'émission de signaux secondaires (202, 260) étalés en fréquences sur une bande recouvrant au moins partiellement la bande de fréquence occupée par les signaux primaires (201, 251, 252, 253), lesdits signaux secondaires (202, 260) comprenant des paramètres de signalisation qui sont exploités, en temps réel, par ledit équipement (402) pour configurer le traitement qui est appliqué aux signaux primaires.

2. Procédé de configuration selon la revendication 1, dans lequel la bande de fréquence occupée par les signaux primaires (201, 251, 252, 253) inclut la bande occupée par les signaux secondaires (202, 260).

3. Procédé de configuration selon la revendication 1 ou 2, dans lequel les signaux secondaires (202, 260) sont portés par une fréquence porteuse étalée par une séquence d'étalement pseudo-aléatoire, ladite porteuse étant étalée sur une bande suffisamment large pour ne pas perturber le décodage des signaux primaires (201, 251, 252, 253), le rapport de densité spectrale de puissance des signaux primaires aux signaux secondaires étant suffisamment élevé pour éviter la production d'interférences entre les signaux primaires et les signaux secondaires nuisibles à la transmission des signaux primaires.

4. Procédé de configuration selon la revendication 3, dans lequel la porteuse soumise à un étalement en fréquence est, avant ledit étalement, modulée par un signal comprenant des symboles d'informations.

5. Procédé de commutation comprenant les étapes du procédé de configuration selon l'une quelconque des revendications précédentes, dans lequel l'équipement (402) doit commuter en temps réel des trames de données vers différentes sorties, lesdites trames étant contenues dans lesdits signaux primaires, lesdits signaux secondaires comprenant des paramètres de signalisation, lesdits paramètres étant exploités en temps réel par ledit équipement (402) pour associer une sortie à chacune desdites trames.

6. Procédé de commutation selon la revendication 5, dans lequel l'équipement récepteur est un satellite de communications multifaisceaux (402), les signaux primaires (201, 251, 252, 253) et les signaux secondaires (202, 260) étant transmis d'une station au sol (401) vers ledit satellite, la commutation des signaux primaires étant effectuée à bord dudit satellite, pour orienter chaque trame vers l'un des faisceaux dudit satellite.

7. Procédé de commutation selon la revendication 5, dans lequel les paramètres de signalisation comprennent, pour chaque trame à commuter :
• la ou les fréquences porteuses sur lesquelles émettre ladite trame ;
• une indication de la sortie prévue pour ladite trame.

8. Procédé de commutation selon l'une quelconque des revendications 5 à 7, dans lequel :
• soit les signaux secondaires (202, 260) sont synchronisés aux signaux primaires ;
• soit, pour chaque trame à commuter, des indications sur les instants auxquels la trame doit être commutée sont intégrés aux paramètres de signalisation compris par les signaux secondaires.

9. Procédé de commutation selon l'une quelconque des revendications 5 à 8, dans lequel des correspondances entre paramètres de signalisation et trames à commuter sont établies,
■ pour chaque trame du signal primaire, un dispositif émetteur (401) étale au moins une fréquence porteuse par une séquence d'étalement qui dépend des paramètres de signalisation à appliquer sur ladite trame, afin de générer lesdits signaux secondaires ;
■ lesdites correspondances sont transmises, via une liaison de communications (405), à l'équipement devant commuter les trames (402);
■ dans ledit équipement (402) :
o retrouver, par corrélation avec la séquence d'étalement transmise au satellite dans lesdites correspondances, la séquence ayant été utilisée pour étaler en fréquence les signaux secondaires, les signaux secondaires étant désétalés en utilisant ladite séquence d'étalement pour extraire les paramètres de signalisation ;
o utiliser les paramètres de signalisation pour commuter les trames des signaux primaires.

10. Procédé de commutation selon l'une des revendications 5 à 9, dans lequel les signaux primaires sont portés par une ou plusieurs fréquences porteuses, une séquence pseudo-aléatoire d'étalement par couple {fréquence porteuse des signaux primaires, faisceau destinataire} étant utilisée, les séquences pseudo-aléatoires étant orthogonales.

11. Dispositif de commutation de trames installé à bord d'un satellite multifaisceaux (402), ledit dispositif comprenant au moins une antenne de réception apte à recevoir des signaux primaires comportant des trames à commuter et des signaux secondaires étalés en fréquence sur une bande recouvrant au moins partiellement celle occupée par lesdits premiers signaux, les signaux secondaires comportant des paramètres de signalisation de commutation, **caractérisé en ce qu'**il comprend un module de commutation (422) alimenté par un module d'extraction des paramètres de signalisation (421) à partir des signaux secondaires étalés, et par un module de configuration (423) enregistrant les correspondances entre séquences d'étalement et paramètres de commutation, le module de commutation (422) étant adapté à orienter les trames des signaux primaires vers le faisceau désigné dans lesdits paramètres de signalisation.

## Claims

1. A method for real-time configuration of an item of equipment (402) receiving and processing primary signals (201, 251, 252, 253) that are transmitted to said item of equipment via a satellite link, said method being **characterised in that** it comprises the transmission of secondary signals (202, 260) that are frequency spread over a band that at least partially covers the frequency band that is occupied by said primary signals (201, 251, 252, 253), said secondary signals (202, 260) comprising signalling parameters that are used by said item of equipment (402) in real time to configure the processing that is applied to said primary signals.

2. The configuration method according to claim 1, wherein the frequency band that is occupied by said primary signals (201, 251, 252, 253) includes the band that is occupied by said secondary signals (202, 260).

3. The configuration method according to claim 1 or 2, wherein said secondary signals (202, 260) are carried by a carrier frequency that is spread by a pseudo-random spreading sequence, said carrier being spread over a band that is wide enough so as not to disrupt the decoding of said primary signals (201, 251, 252, 253), the ratio of power spectral density between said primary signals and said secondary signals being high enough to prevent the production of interference between said primary signals and said secondary signals that would be detrimental to the transmission of said primary signals.

4. The configuration method according to claim 3, wherein the carrier that is subject to frequency spreading is, before said spreading, modulated by a signal that comprises symbols of information.

5. A switching method comprising the steps of the configuration method according to any one of the preceding claims, wherein the item of equipment (402) must switch data frames in real time to different outputs, said frames being contained in said primary signals, said secondary signals comprising signalling parameters, said parameters being used in real time by said item of equipment (402) to associate an output with each of said frames.

6. The switching method according to claim 5, wherein the receiving equipment is a multi-beam communications satellite (402), said primary signals (201, 251, 252, 253) and said secondary signals (202, 260) being transmitted from a ground station (401) to said satellite, the switching of said primary signals being carried out on board said satellite so as to orient each frame toward one of the beams of said satellite.

7. The switching method according to claim 5, wherein the signalling parameters comprise, for each frame to be switched:
• he one or more carrier frequencies on which said frame is transmitted;
• an indication of the output scheduled for said frame.

8. The switching method according to any one of claims 5 to 7, wherein;
• either said secondary signals (202, 260) are synchronised with said primary signals;
• or, for each frame to be switched, indications that relate to the instants at which the frame must be switched are integrated into the signalling parameters that are included by said secondary signals.

9. The switching method according to any one of claims 5 to 8, wherein correspondences between signalling parameters and frames to be switched are established,
• for each frame of the primary signal, a transmitting device (401) spreads at least one carrier frequency by a spreading sequence that depends on the signalling parameters to be applied to said frame so as to generate said secondary signals;
• said correspondences are transmitted, via a communications link (405), to the item of equipment (402) that has to switch the frames;
• in said item of equipment (402):
○ finding, by correlation with the spreading sequence transmitted to the satellite in said correspondences, the sequence that was used to frequency spread said secondary signals, said secondary signals being unspread using said spreading sequence to extract the signalling parameters;
○ using the signalling parameters to switch the frames of said primary signals.

10. The switching method according to any one of claims 5 to 9, wherein said primary signals are carried by one or more carrier frequencies, a pseudo-random spreading sequence per pair {carrier frequency of the primary signals, destination beam) being used, the pseudo-random sequences being orthogonal.

11. A device for switching frames installed on board a multi-beam satellite (402), said device comprising at least one receiving antenna that is designed to receive primary signals comprising frames to be switched and secondary signals that are frequency spread over a band that at least partially covers a band that is occupied by said first signals, said secondary signals comprising switching signalling parameters, **characterised in that** it comprises a switching module (422) that is fed by a module for extracting signalling parameters (421) from spread secondary signals, and by a configuration module (423) recording the correspondences between spreading sequences and switching parameters, said switching module (422) being designed to orient the frames of the primary signals toward the beam that is designated in said signalling parameters.

## Patentansprüche

1. Verfahren zum Konfigurieren einer Einrichtung (402) in Echtzeit, die über eine Satellitenverbindung zu ihr gesendete Primärsignale (201, 251, 252, 253) empfängt und verarbeitet, wobei das Verfahren **dadurch gekennzeichnet ist, dass** es das Aussenden von Sekundärsignalen (202, 260) beinhaltet, die frequenzmäßig über ein Band gespreizt sind, das das von den Primärsignalen (201, 251, 252, 253) belegte Frequenzband weinigstens teilweise abdeckt, wobei die Sekundärsignale (202, 260) Signalisierungsparameter beinhalten, die von der Einrichtung (402) in Echtzeit zum Konfigurierten der auf die Primärsignale angewendeten Verarbeitung verwendet werden.

2. Konfigurationsverfahren nach Anspruch 1, wobei das von den Primärsignalen (201, 251, 252, 253) belegte Frequenzband das Band beinhaltet, das von den Sekundärsignalen (202, 260) belegt wird.

3. Konfigurationsverfahren nach Anspruch 1 oder 2, wobei die Sekundärsignale (202, 260) von einer Trägerfrequenz getragen werden, die durch eine pseudozufällige Spreizsequenz gespreizt wird, wobei der Träger über ein Band gespreizt ist, das breit genug ist, um die Decodierung der Primärsignale (201, 251, 252, 253) nicht zu stören, wobei das Leistungsspektrumsdichteverhältnis zwischen den Primärsignalen und den Sekundärsignalen hoch genug ist, um die Entstehung von Interferenzen zwischen den Primärsignalen und den Sekundärsignalen zu verhindern, die für die Übertragung der Primärsignale schädlich wären.

4. Konfigurationsverfahren nach Anspruch 3, wobei der Träger, der einer Frequenzspreizung unterliegt, vor der Spreizung mit einem Signal moduliert wird, das Informationssymbole beinhaltet.

5. Schaltverfahren, das die Schritte des Konfigurationsverfahrens nach einem der vorherigen Ansprüche beinhaltet, wobei die Einrichtung (402) in Echtzeit Daten-Frames auf verschiedene Ausgänge schalten muss, wobei die Frames in den Primärsignalen enthalten sind, wobei die Sekundärsignale Signalisierungsparameter enthalten, wobei die Parameter in Echtzeit von der Einrichtung (402) zum Zuordnen eines Ausgangs zu jedem der Frames verwendet werden.

6. Schaltverfahren nach Anspruch 5, wobei die Empfancseinrichtung ein Mehrstrahl-Kommunikationssatellit (402) ist, wobei die Primärsignale (201, 251, 252, 253) und die Sekundärsignale (202, 260) von einer Bodenstation (401) zu dem Satelliten übertragen werden, wobei die Primärsignale an Bord des Satelliten geschaltet werden, um jeden Frame zu einem der Strahlen des Satelliten zu orientieren.

7. Schaltverfahren nach Anspruch 5, wobei die Signalisierungsparameter für jeden zu schaltenden Rahmen Folgendes beinhalten:
• die eine oder mehreren Trägerfrequenzen, auf denen der Frame emittiert wird;
• eine Anzeige des für den Frame vorgesehenen Ausgangs.

8. Schaltverfahren nach einem der Ansprüche 5 bis 7, wobei:
• entweder die Sekundärsignale (202, 260) mit den Primärsignalen synchronisiert werden;
• oder für jeden zu schaltenden Frame Anzeigen, die sich auf die Zeitpunkte beziehen, zu denen der Frame beschaltet werden muss, in die in den Sekundärsignalen enthaltenen Signalisierungsparameter integriert sind.

9. Schaltverfahren nach einem der Ansprüche 5 bis 8, wobei Korrespondenzen zwischen Signalisierungsparametern und zu schaltenden Frames hergestellt werden,
• für jeden Frame des Primärsignals spreizt ein Emitter (401) wenigstens eine Trägerfrequenz mit einer Spreizsequenz, die von den auf den Frame anzuwendenden Signalisierungsparametern abhängig ist, um die Sekundärsignale zu erzeugen;
• die Korrespondenzen werden über eine Kommunikationsverbindung (405) zu der Einrichtung (402) übertragen, die die Frames schalten soll;
• in der Einrichtung (402):
○ Suchen, durch Korrelation mit der in den Korrespondenzen zum Satelliten übertragenen Spreizsequenz, der Sequenz, die zum frequenzmäßigen Spreizen der Sekundärsignale benutzt wurde, wobei die sekundären Signale unter Verwendung der Spreizsequenz entspreizt werden, um die Signalisierungsparameter zu extrahieren;
○ Verwenden der Signalisierungsparameter zum Schalten der Frames der Primärsignale.

10. Schaltverfahren nach einem der Anspruche 5 bis 9, wobei die Primärsignale von einer oder mehreren Trägerfrequenzen getragen werden, wobei eine pseudozufällige Spreizsequenz pro Paar {Träger Frequenz der Primärsignale, Zielstrahl} benutzt wird, wobei die pseudozufälligen Sequenzen orthogonal sind.

11. vorrichtung zum Schalten von Frames, die an Bord eines Mehrstrahl-Satelliten (402) installiert ist, wobei die Vorrichtung wenigstens eine Empfangsantenne umfasst, die so ausgelegt ist, dass sie zu schaltende Frames umfassende Primärsignale und Sekundärsignale empfängt, die frequenzmäßig über ein Band gespreizt sind, das wenigstens teilweise ein Band abdeckt, das von den ersten Signalen belegt wird, wobei die Sekundärsignale Schaltungssiwnalisiemngsparameter beinhalten, **dadurch gekennzeichnet, dass** sie ein Schaltmodul (422) umfasst, das von einem Modul zum Extrahieren von Signalisierungsparametern (421) von gespreizten Sekundärsignalen gespeist wird, und durch ein Konfigurationsmodul (423), das die Korrespondenzen zwischen Spreizsequenzen und Schaltparametern aufzeichnet, wobei das Schaltmodul (422) so ausgelegt ist dass es die Frames der Primärsignale in Richtung auf den Strahl orientiert, der in den Signalisierungsparametern vorgegeben ist.
